# EUROPEAN PATENT APPLICATION

(11) **EP 4 738 664 A1**
(43) Date of publication of application: **06.05.2026**
(21) Application number: 24209679.0
(22) Date of filing: 30.10.2024
(51) Int. Cl.: H02K 5/20, H02K 9/19, H02K 1/20

(54) **AXIAL OIL COOLING OF CONDUCTIVE ELEMENTS IN AN ELECTRIC MACHINE**

(71) Applicant: Volvo Car Corporation, 405 31 Göteborg (SE)
(72) Inventor: Oldenburg, Martina, 405 31 Göteborg (SE); Fredriksson, Ylva, 405 31 Göteborg (SE)
(74) Representative: Nederlandsch Octrooibureau

(57) **Abstract**

A cooling ring for an electric machine, the cooling ring including a first portion with an exterior surface having a first end and a second end, and a hollow interior extending along a longitudinal axis of the cooling ring, wherein the hollow interior is configured to encompass a first end of a stator; and a shoulder at the first end of the first portion extending radially outward, wherein the shoulder comprises an axial opening extending in a first direction, wherein the first direction is substantially parallel to the longitudinal axis of the cooling ring.

## Description

### Technical Field

The present disclosure relates generally to electric machines, in particular electric machines in the automotive fields. More particularly, the present disclosure relates to a ring for a stator cooling assembly of an electric machine, such as that used in an electric vehicles.

### Background of the Present Disclosure

An electric machine generates heat during operation. Means of cooling the electric machine may include a stator back water jacket or using cooling fluids such as oil to cool conductive elements of the electric machine. Oil cooled electric machines are very efficient with respect to rotor cooling, but stator assembly cooling is complicated. In particular, it is difficult to effectively cool the conductive elements of the stator assembly beyond the stator windings.

As the temperature of the electric machine rises, the performance of the electric machine may degrade. To maintain performance of the electric machine within a desired temperature range, an electric machine assembly may distribute cooling fluid in a radial direction to the windings of the electric machine assembly. Overheated conductive elements, such as busbars, may suffer from high temperatures. This may be a result of their proximity to cooling fluid, for example when conductive elements are relatively far from existing cooling fluid distribution mechanisms.

However, there is a trend to make things more compact which may make it harder to incorporate space to implement a distribution for the cooling fluid to other conductive elements in an axial direction.

Thus, it would be desired to have an improved stator cooling assembly for distributing a cooling fluid such as oil, liquid, gas or other fluid, to cool an electric machine.

The background section relating to using a stator cooling assembly is merely intended to provide a contextual overview of some current issues and is not intended to be exhaustive. Other contextual information may become apparent to a person of skill in the art upon review of the following detailed description.

### Summary of the Present Disclosure

Providing a ring with axial openings results in the ability to distribute cooling fluid to conductive elements positioned in an axial direction relative to the cooling ring.

The cooling ring may distribute cooling fluid in multiple directions which reduces or eliminates the risk of an electric machine overheating. For example, the cooling ring may distribute cooling fluid in both a radial and axial direction.

The cooling ring may surround windings of a stator such that the windings are positioned in a radial direction relative to the cooling ring. In addition to distributing cooling fluid to the windings, the axial openings may be configured to distribute cooling fluid to other conductive elements, such as busbars.

During operation of an electric machine, the windings of the stator and the busbars, or any other conductive element, conductively connected to the windings, may generate heat. As the temperature of the electric machine increases, performance of the electric machine may degrade. Distributing cooling fluid to the conductive elements which are conductively connected to the windings may maintain the electric machine within a desired temperature range. For example, an electric machine assembly may distribute cooling fluid in multiple directions of the electric machine assembly.

Including axial openings in a cooling ring can distribute cooling fluid to conductive elements beyond the windings of stator without having to increase the size the of an electric machine housing or redesign any other component of an electric machine assembly. As a result, there is a potential to maintain the temperature of an electric machine without introducing additional parts to an electric machine housing system.

According to an embodiment, the cooling ring includes one or more radially inward depressions spaced around at least part of the circumference of the first portion at the first end. Such inward depressions may be incorporated in spaces available in existing machine housings. Additionally, the inward depressions may reduce the amount of cooling fluid required in the electric machine housing by taking advantage of existing cooling fluid distributions mechanisms. For example, using the existing cooling fluid reservoir to cool further conductive elements.

According to an embodiment, the radially inward depressions include a shoulder at the first end of the first portion extending radially outward and the axial opening. Such shoulder provides for a surface for the axial openings, without increasing a circumference of the cooling ring.

According to an embodiment, the cooling ring is disposed between a housing and the first end of the stator, wherein a position of the cooling ring creates a gap between the housing and the exterior surface of the cooling ring. Such a gap creates a sealed chamber or reservoir for receiving a cooling fluid such that it can be distributed through the axial openings.

According to an embodiment, the position of the axial opening is axially facing a first conductive element, wherein that the first conduct element is substantially in the first direction relative to the axial opening.

According to an embodiment, the first conductive element may be a busbar, a winding, or an I-pin or any other conductive element of an electric machine assembly. Different configurations of an electric machine may include conductive elements in different positions. The cooling ring of the embodiment may cool any conductive element in an axial direction relative to the cooling ring. In this way the temperature of the electric machine may be maintained within an operable range no matter what the configuration is.

According to an embodiment, the gap, including the depression, is configured to fill with cooling fluid. The gap may be configured to maintain a pressure of the cooling fluid such that the cooling fluid passes through the axial opening with enough force to reach the targeted conductive element.

According to an embodiment, the cooling ring may further include a radial opening extending in a second direction, wherein the second direction is substantially perpendicular to the first direction, and wherein the cooling fluid passes through the radial opening in substantially the second direction. This provides the ability to cool conductive elements in both the radial and axial direction of the cooling ring.

According to an embodiment, the radial opening is radially facing a second conductive element. The second conductive element may be windings of a stator surrounded by the cooling ring.

According to an embodiment, the second conductive element is at the first end of the stator. The cooling ring may surround the conductive elements at the first end of the stator. The radial openings may distribute cooling fluid to the conductive elements, such as windings of a stator, in addition to other conductive elements connected to the windings.

According to an embodiment, the second conductive element is a winding of the stator and/or an I-pin of the stator. The cooling ring may be configured to distribute cooling fluid to a variety of second conductive elements, where the cooling ring is configured to surround a conductive element of any configuration of electric machine.

According to an embodiment, the cooling ring is formed of plastic. Plastic may be formed to withstand the temperatures of the electric machine without conducting heat itself. Additionally, plastic is an easily formable material to manufacture the cooling ring for any shape and size of an electric machine.

According to and embodiment, A stator cooling assembly for an electric machine, the stator assembly comprising a housing, where the housing comprises a cooling fluid reservoir and a hollow opening, wherein the cooling fluid reservoir comprises a fluid opening extending radially inward from the cooling reservoir to the hollow opening; a stator, where the stator comprises a core and a first conductive element extending from the core in an axial direction, wherein the core comprises a cooling fluid channel, and wherein the fluid channel is positioned to align with the fluid opening of the housing; and a cooling ring, where the cooling ring comprises a first portion with an exterior surface having a first end and a second end, and a hollow interior extending along a longitudinal axis of the cooling ring, wherein the hollow interior is configured to encompass the first conductive element of the stator, a shoulder at the first end of the first portion extending radially outward, wherein the shoulder comprises an axial opening extending in a first direction, wherein the first direction is substantially parallel to the longitudinal axis of the cooling ring, wherein the cooling ring is positioned in the hollow opening of the housing such that the second end is adjacent to the core, and an interior surface of the housing and the exterior surface of the cooling ring create a gap, and the axial opening faces a second conductive element, and wherein the stator cooling assembly is configured to distribute cooling fluid from the cooling fluid reservoir through the cooling fluid channel to fill the gap, and further distribute the cooling fluid through the axial opening to the second conductive element.

Such a configuration of an electric machine assembly may provide cooling fluid distribution without requiring additional elements. The cooling fluid may drain from the assembly to be cooled and recycled for reuse in cooling conductive elements.

### Brief Description of the Drawings

The present disclosure will now be described in further detail with reference to the drawings that shows one embodiment of the present disclosure:
FIG. 1A is a perspective view of a cooling ring to distribute cooling fluid in an axial direction according to at least one example of the disclosure;
FIG. 1B is an end view of the cooling ring of FIG. 1A;
FIG. 1C is a cross-sectional view of the cooling ring of FIG. 1A;
FIG. 2A is a perspective view of cooling ring with a depression to distribute cooling fluid in an axial direction according to at least one example of the disclosure;
FIG. 2B is an end view of the cooling ring of FIG. 2A;
FIG. 2C is a cross-sectional view of the cooling ring of FIG. 2A;
FIG. 3A is a perspective view of cooling ring with multiple depressions to distribute cooling fluid in an axial direction according to at least one example of the disclosure;
FIG. 3B is an end view of the cooling ring of FIG. 3A;
FIG. 3C is a cross-sectional view of the cooling ring of FIG. 3A;
FIG. 4A is a perspective view of cooling ring with multiple depressions to distribute cooling fluid in an axial direction according to at least one example of the disclosure;
FIG. 4B is an end view of the cooling ring of FIG. 4A;
FIG. 4C is a cross-sectional view of the cooling ring of FIG. 4A;
FIG. 5A is a perspective view of cooling ring with an angled depression to distribute cooling fluid in an axial direction according to at least one example of the disclosure;
FIG. 5B is an end view of the cooling ring of FIG. 5A;
FIG. 5C is a cross-sectional view of the cooling ring of FIG. 5A;
FIG. 6A is a perspective view of cooling ring with multiple angled depressions to distribute cooling fluid in an axial direction according to at least one example of the disclosure;
FIG. 6B is an end view of the cooling ring of FIG. 6A;
FIG. 6C is a cross-sectional view of the cooling ring of FIG. 6A;
FIG. 7A is a perspective view of cooling ring with multiple angled depressions to distribute cooling fluid in an axial direction according to at least one example of the disclosure;
FIG. 7B is an end view of the cooling ring of FIG. 7A;
FIG. 7C is a cross-sectional view of the cooling ring of FIG. 7A;
FIG. 8 is a cross sectional view of an electric machine housing including a cooling ring.
FIG. 8A is s close up view of the axial opening with the electric machine housing of FIG. 8
FIGS. 9A and 9B illustrate charts chart comparing operating temperatures of an electric machine in use with a cooling ring with an axial opening and a cooling ring without an a

### Detailed Description

The present disclosure is directed to a cooling ring with axial openings that may be used in an electric machine housing to distribute cooling fluid to conductive elements such as windings of a stator. One or more axial openings may be configured to distribute cooling fluid in an axial direction to additional conductive elements in an axial position relative to the cooling ring.

The axial openings of the cooling ring distribute cooling fluid, such as oil, to conductive elements in the axial direction, relative to the cooling ring, without the need for extra features of an electric machine assembly. As the trend to make things compact continues, it is beneficial to introduce functions without introducing further elements. For example, oil may pass through the axial openings of the cooling ring to spray oil to conductive elements, such as busbars, of the electric machine assembly.

The axial openings of the cooling ring to distribute cooling fluid, such as oil, to conductive elements in the axial direction, in addition to radial openings which distributes cooling fluid to a further conductive elements such as windings of a stator.

The present disclosure effectively reduces the temperature of the electric machine to maintain a temperature of the electric machine within a desired range. For example, it may be desired to maintain the temperature of conductive elements below a maximum temperature at which the performance of the electric machine degrades to an undesired performance level. Maintaining the temperature below the maximum temperature maintains performance of the electric machine in a desired level because less current is needed to reach a desired torque and because conductive elements provide less resistance at cooler temperatures. The present disclosure may reduce the temperature of the electric machine as compared to an electric machine without axial openings for distributing cooling fluid in an axial direction. As a result, the electric machine's efficiency increases as compared to electric machine operating without distribution of cooling fluid in the axial direction.

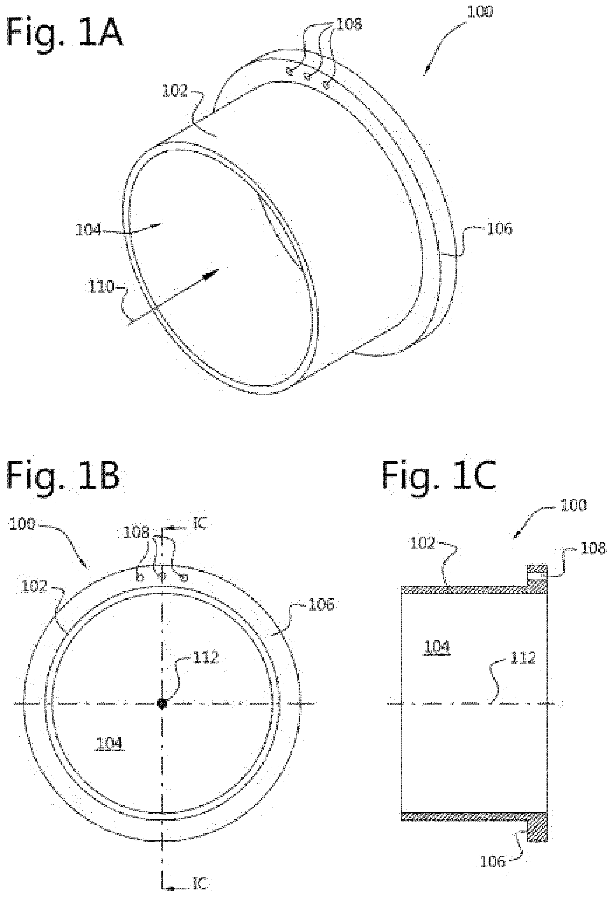

FIG. 1A is a perspective view of cooling ring 100, FIG. 1B is an end view of cooling ring 100 and FIG. 1C is a cross-sectional view of cooling ring 100. Cooling right 100 includes exterior surface 102 with hollow interior 104. Cooling ring 100 further includes shoulder 106 and one or more axial openings 108 in shoulder 106. First direction 110 may run through hollow interior 104 such that first direction 110 runs along the center line 112 of cooling ring 100 or a parallel to the center line 112. Axial openings 108 may be substantially aligned with first direction 110. In some embodiments cooling ring 100 may include bevels at both ends (not shown in FIG. 1) to generate a seal between cooling ring 100 an other parts of an electric machine housing. Cooling ring 100 is typically hollow and includes hollow interior 104, which is typically cylindrical and extends through the length of cooling ring 100. Hollow interior 104 may be sized and configured to fit around windings for an electric machine.

The position of the axial openings needs to be configured to maintain a desired distance from other surfaces such that the cooling fluid distribution is directed at its intended target. For example, the axial opening 108 should generate oil spray from axial opening 108 to target a conductive element and reduce or eliminate oil spray to other surfaces. The dimension of cooling ring 100 may vary depending on the configuration of the electric machine.

Cooling ring 100 may be formed from plastic or any other material appropriate for the desired assembly depending on assembly requirements.

Typically, cooling ring 100 would be assembled between a housing and an electric machine such that it surrounds a conductive element of the electric machine.

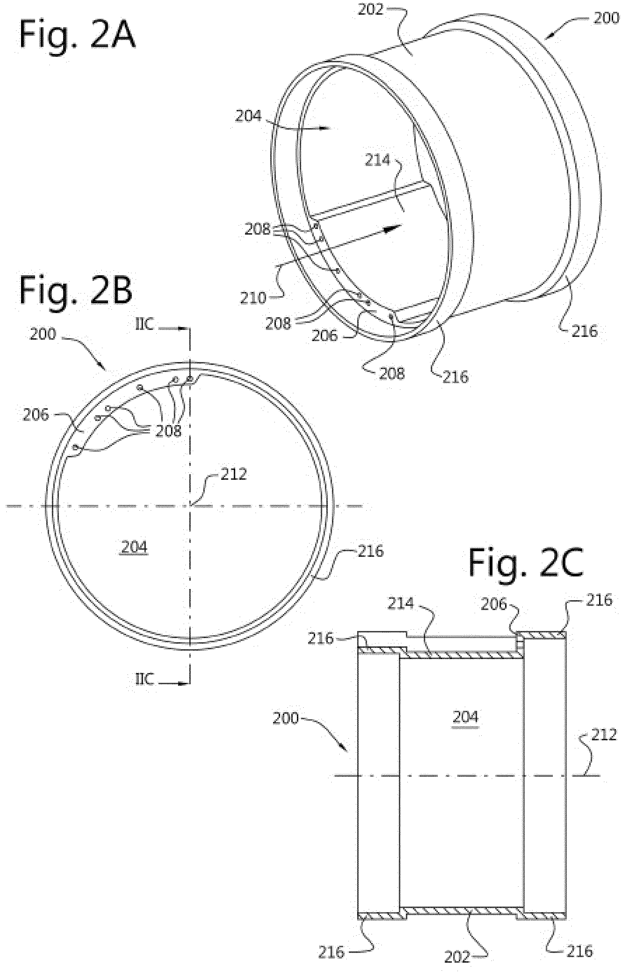

FIG. 2A is a perspective view of cooling ring 200, FIG. 2B is an end view of cooling ring 200 and FIG. 2C is a cross-sectional view of cooling ring 200. Cooling right 200 includes exterior surface 202 with hollow interior 204. Cooling ring 200 further includes shoulder 206 formed at first end of depression 214 and one or more axial openings 208 in shoulder 206. First direction 210 may run through hollow interior 204 such that first direction 210 runs along the center line 212 of cooling ring 200 or a parallel to the center line 212. Axial openings 208 may be substantially aligned with first direction 210. In some embodiments cooling ring 200 may include bevels 216 at both ends to generate a seal between cooling ring 200 an other parts of an electric machine housing. Bevels 216 may be incorporated into depression 214 depending on the electric machine configuration as shown in FIGS. 2A and 2C. Alternatively, depression 214 may not in only a part of the length of exterior surface 202. Cooling ring 200 is typically hollow and includes hollow interior 204, which is typically cylindrical and extends through the length of cooling ring 200. Hollow interior 204 may be sized and configured to fit around windings for an electric machine.

One or more axial openings 208 may be configured to distribute cooling fluid to a conductive element. For example, if there are four busbars in an electric machine assembly, but two of the four busbars produce more heat than the other two busbars, then two axial openings 208 may be in a position to distribute cooling fluid to the two busbars that generate more heat as compared to the other two busbars. The dimension of cooling ring 100 may vary depending on the configuration of the electric machine.

Cooling ring 200 may be formed from plastic or any other material appropriate for the desired assembly depending on assembly requirements.

Typically, cooling ring 200 would be assembled between a housing and an electric machine such that it surrounds a conductive element of the electric machine.

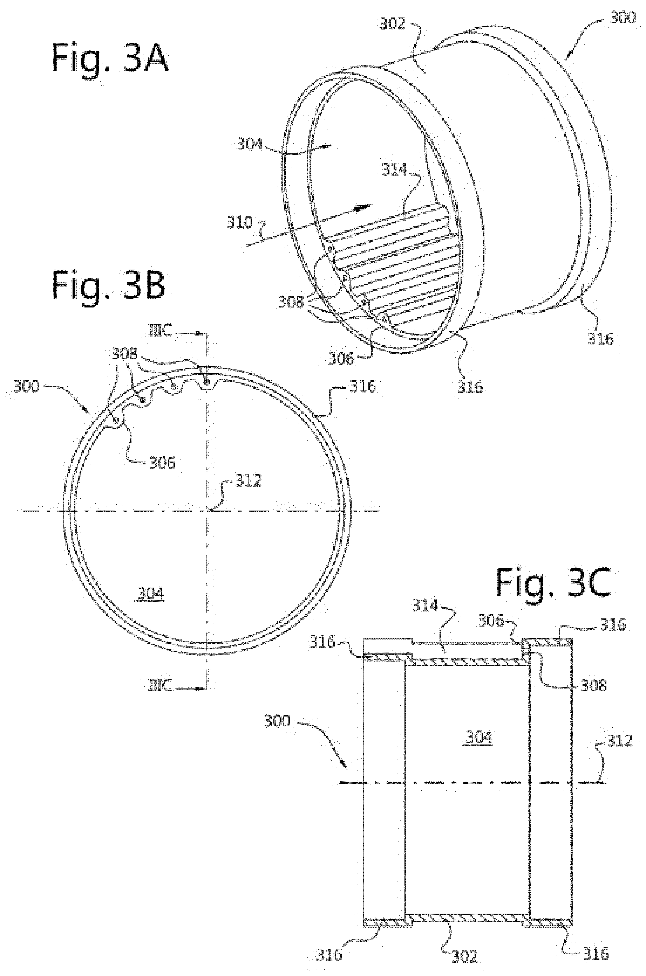

FIG. 3A is a perspective view of cooling ring 300, FIG. 3B is an end view of cooling ring 300 and FIG. 3C is a cross-sectional view of cooling ring 300. Cooling right 300 includes exterior surface 302 with hollow interior 304. Cooling ring 300 further includes shoulder 306 formed at first end of depressions 314 and one or more axial openings 308 in shoulder 306. First direction 310 may run through hollow interior 304 such that first direction 310 runs along the center line 312 of cooling ring 300 or a parallel to the center line 312. Axial openings 308 may be substantially aligned with first direction 310. In some embodiments cooling ring 300 may include bevels 316 at both ends to generate a seal between cooling ring 300 an other parts of an electric machine housing. Cooling ring 300 is typically hollow and includes hollow interior 304, which is typically cylindrical and extends through the length of cooling ring 300. Hollow interior 304 may be sized and configured to fit around windings for an electric machine. The dimension of cooling ring 100 may vary depending on the configuration of the electric machine.

Cooling ring 300 may be formed from plastic or any other material appropriate for the desired assembly depending on assembly requirements.

Typically, cooling ring 300 would be assembled between a housing and an electric machine such that it surrounds a conductive element of the electric machine.

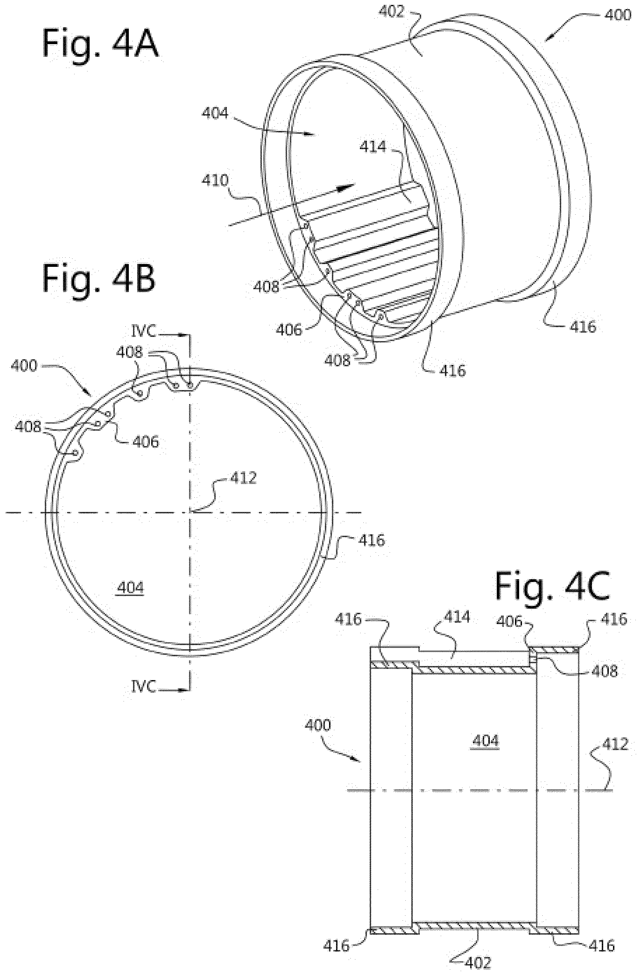

FIG. 4A is a perspective view of cooling ring 400, FIG. 4B is an end view of cooling ring 400 and FIG. 4C is a cross-sectional view of cooling ring 400. Cooling right 400 includes exterior surface 402 with hollow interior 404. Cooling ring 400 further includes shoulder 406 formed at first end of depressions 414 and one or more axial openings 408 in shoulder 406. First direction 410 may run through hollow interior 404 such that first direction 410 runs along the center line 412 of cooling ring 400 or a parallel to the center line 412. Axial openings 408 may be substantially aligned with first direction 410. In some embodiments cooling ring 400 may include bevels 416 at both ends to generate a seal between cooling ring 400 an other parts of an electric machine housing. Cooling ring 400 is typically hollow and includes hollow interior 404, which is typically cylindrical and extends through the length of cooling ring 400. Hollow interior 404 may be sized and configured to fit around windings for an electric machine.

One or more axial openings 408 may be configured to distribute cooling fluid to a conductive element. For example, if there are four busbars in an electric machine assembly, but two of the four busbars produce more heat than the other two busbars, then two axial openings 408 may be in a position to distribute cooling fluid to the two busbars that generate more heat as compared to the other two busbars. The dimension of cooling ring 100 may vary depending on the configuration of the electric machine.

Cooling ring 400 may be formed from plastic or any other material appropriate for the desired assembly depending on assembly requirements.

Typically, cooling ring 400 would be assembled between a housing and an electric machine such that it surrounds a conductive element of the electric machine.

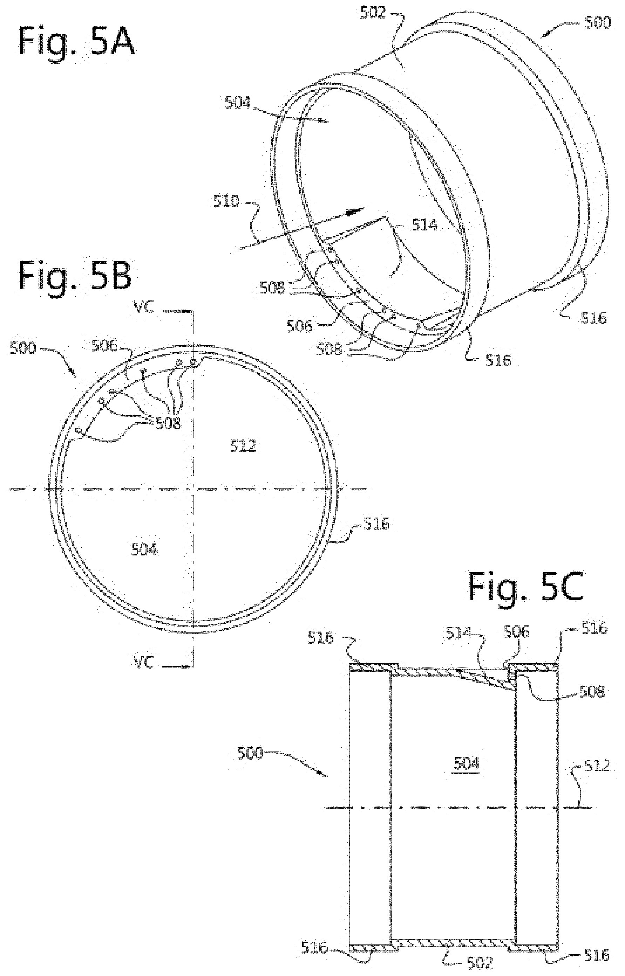

FIG. 5A is a perspective view of cooling ring 500, FIG. 5B is an end view of cooling ring 500 and FIG. 5C is a cross-sectional view of cooling ring 500. Cooling right 500 includes exterior surface 502 with hollow interior 504. Cooling ring 500 further includes shoulder 506 formed at first end of depression 514 and one or more axial openings 508 in shoulder 506. First direction 510 may run through hollow interior 504 such that first direction 510 runs along the center line 512 of cooling ring 500 or a parallel to the center line 512. Axial openings 508 may be substantially aligned with first direction 510. In some embodiments cooling ring 500 may include bevels 516 at both ends to generate a seal between cooling ring 500 an other parts of an electric machine housing. Cooling ring 500 is typically hollow and includes hollow interior 504, which is typically cylindrical and extends through the length of cooling ring 500. Hollow interior 504 may be sized and configured to fit around windings for an electric machine.

One or more axial openings 508 may be configured to distribute cooling fluid to a conductive element. For example, if there are four busbars in an electric machine assembly, but two of the four busbars produce more heat than the other two busbars, then two axial openings 508 may be in a position to distribute cooling fluid to the two busbars that generate more heat as compared to the other two busbars. The dimension of cooling ring 100 may vary depending on the configuration of the electric machine.

Cooling ring 500 may be formed from plastic or any other material appropriate for the desired assembly depending on assembly requirements.

Typically, cooling ring 500 would be assembled between a housing and an electric machine such that it surrounds a conductive element of the electric machine.

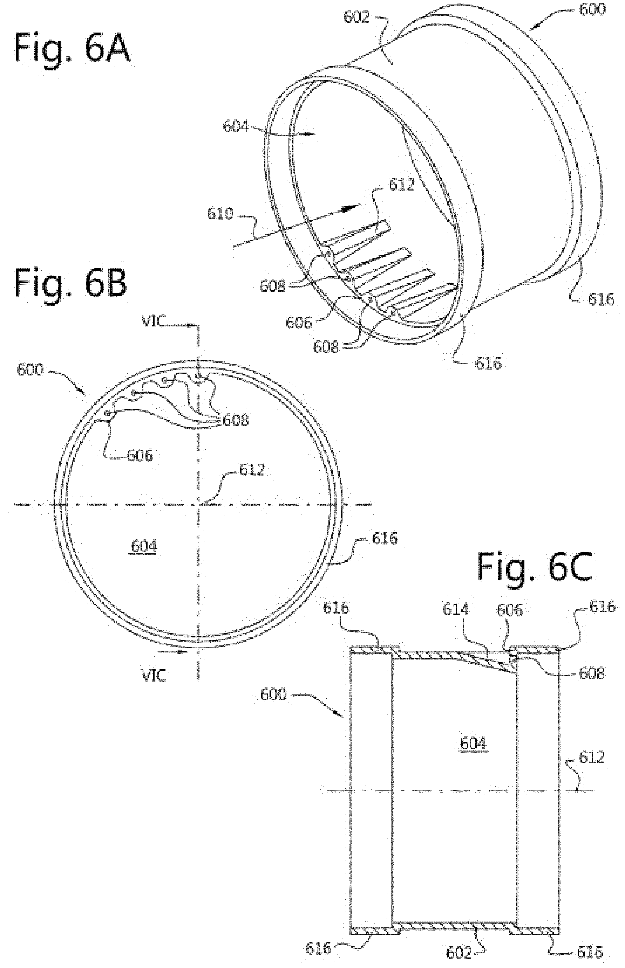

FIG. 6A is a perspective view of cooling ring 600, FIG. 6B is an end view of cooling ring 600 and FIG. 6C is a cross-sectional view of cooling ring 600. Cooling right 600 includes exterior surface 602 with hollow interior 604. Cooling ring 600 further includes shoulder 606 formed at first end of depressions 614 and one or more axial openings 608 in shoulder 606. First direction 610 may run through hollow interior 604 such that first direction 610 runs along the center line 612 of cooling ring 600 or a parallel to the center line 612. Axial openings 608 may be substantially aligned with first direction 610. In some embodiments cooling ring 600 may include bevels 616 at both ends to generate a seal between cooling ring 600 an other parts of an electric machine housing. Cooling ring 600 is typically hollow and includes hollow interior 604, which is typically cylindrical and extends through the length of cooling ring 600. Hollow interior 604 may be sized and configured to fit around windings for an electric machine. The dimension of cooling ring 100 may vary depending on the configuration of the electric machine.

Cooling ring 600 may be formed from plastic or any other material appropriate for the desired assembly depending on assembly requirements.

Typically, cooling ring 600 would be assembled between a housing and an electric machine such that it surrounds a conductive element of the electric machine.

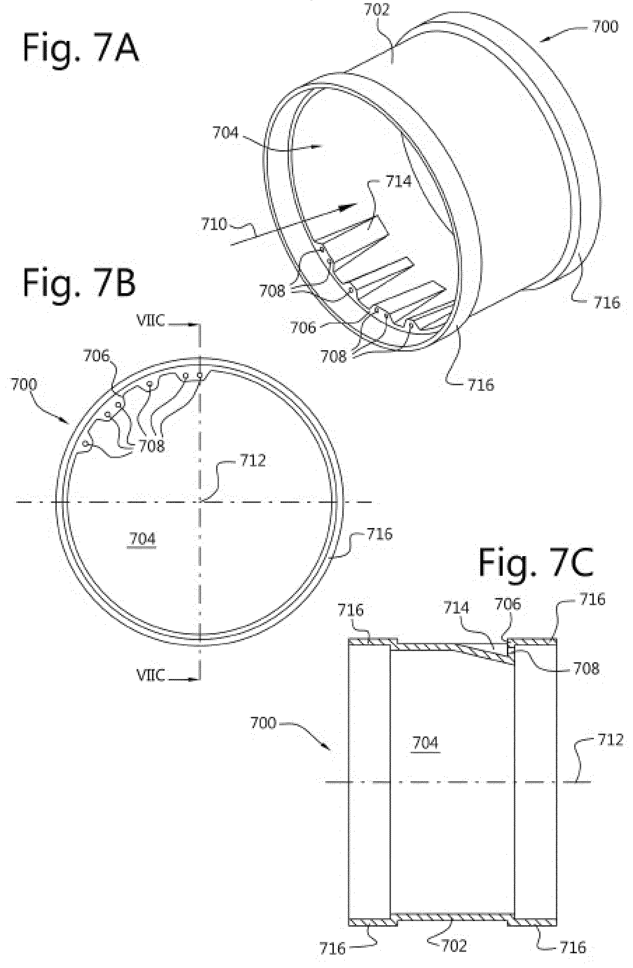

FIG. 7A is a perspective view of cooling ring 700, FIG. 7B is an end view of cooling ring 700 and FIG. 7C is a cross-sectional view of cooling ring 700. Cooling right 700 includes exterior surface 702 with hollow interior 704. Cooling ring 700 further includes shoulder 706 formed at first end of depressions 714 and one or more axial openings 708 in shoulder 706. First direction 710 may run through hollow interior 704 such that first direction 710 runs along the center line 712 of cooling ring 700 or a parallel to the center line 712. Axial openings 708 may be substantially aligned with first direction 710. In some embodiments cooling ring 700 may include bevels 716 at both ends to generate a seal between cooling ring 700 an other parts of an electric machine housing. Cooling ring 700 is typically hollow and includes hollow interior 704, which is typically cylindrical and extends through the length of cooling ring 700. Hollow interior 704 may be sized and configured to fit around windings for an electric machine.

One or more axial openings 708 may be configured to distribute cooling fluid to a conductive element. For example, if there are four busbars in an electric machine assembly, but two of the four busbars produce more heat than the other two busbars, then two axial openings 708 may be in a position to distribute cooling fluid to the two busbars that generate more heat as compared to the other two busbars. The dimension of cooling ring 100 may vary depending on the configuration of the electric machine.

Cooling ring 700 may be formed from plastic or any other material appropriate for the desired assembly depending on assembly requirements.

Typically, cooling ring 700 would be assembled between a housing and an electric machine such that it surrounds a conductive element of the electric machine.

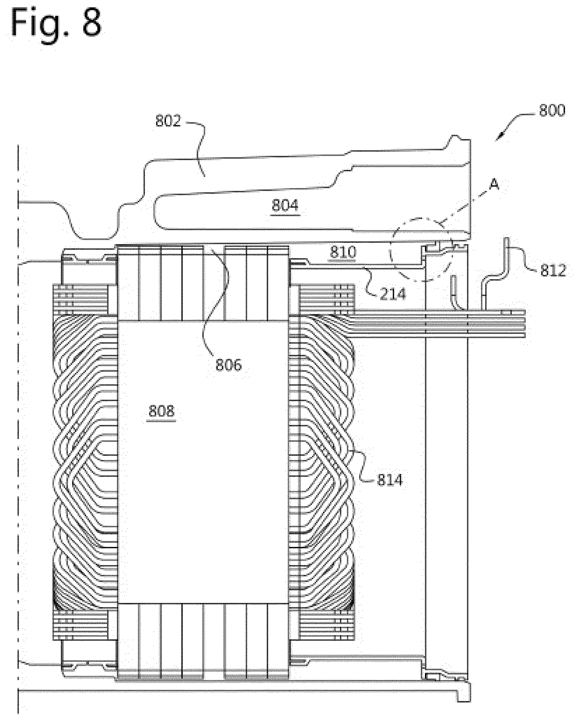

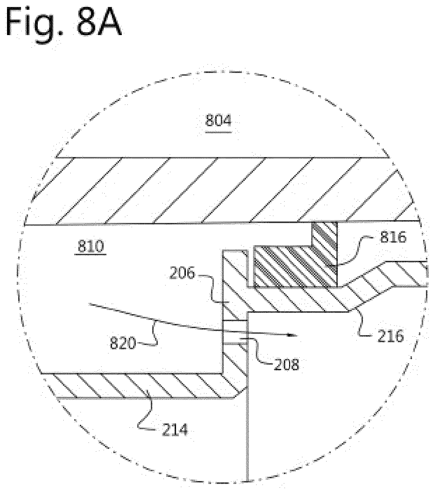

FIG. 8 illustrates a cross-sectional view of exemplary assembly 800 including a cooling ring. For example cooling ring 200 of FIGS. 2A-2C. It should be noted that any cooling ring, such as those described with respect to FIGS. 1A-1C to 7A-7C may be included in assembly 800. Assembly 800 may include housing 802 to house electric machine 808 and cooling ring 200. Housing 802 may include a cooling fluid reservoir 804. Housing 802 may further include an opening (not shown) such that cooling fluid may pass from cooling fluid reservoir 804 into cooling fluid inlet 806. The cooling fluid may be distributed along the side of electric machine 808, such as a stator. The cooling fluid passes from fluid inlet 806, along the side of electric machine 808, to fill gap 810. Gap 810 may be formed in part by depression 214 and housing 802. The Cooling fluid may fill gap 810 such that it has enough pressure to pass through axial opening 208 in shoulder 206 and reach conductive element 812. For example, the pressure may generate an oil spray from axial opening 208 to conductive element 812. Additionally depression 214 may include openings in the radial direction (not shown) to further distribute cooling fluid in the radial direction to conductive element 814. Close up of FIG. 8, FIG. 8A, illustrates flow 820 representing the distribution of cooling fluid from gap 810 in an axial direction toward conductive element 812. Additionally, assembly 800 may further include seal 816, such as a rubber seal, at one or both ends of cooling ring 200 to seal gap 810. Seal 816 may be in a position between cooling ring 200 and housing 802, for example to between bevel 216 and hosing 802. Seal 816 may be configured to ensure gap 810 is tightly sealed such that the cooling liquid may only exit gap 810 through axial opening 208.

Electric machine 808 may be configured with one or more outer longitudinal cooling fluid channels. The cooling fluid may pass from the fluid inlet 806 to the cooling fluid channels. The cooling fluid channels may run along or adjacent to stator laminates or along the outer perimeter of stator subassemblies. The one or more cooling fluid channels are coupled to the one or more outer longitudinal cooling fluid channels and are configured to deliver a cooling fluid to axial openings 208. The one or more radial cooling fluid channels may be formed by a segmented annular plate disposed between the stator subassemblies. The cooling fluid may drain from the subassembly in any convenient manner, such as from one or more of the opposed ends of the stator, and be cooled and reused.

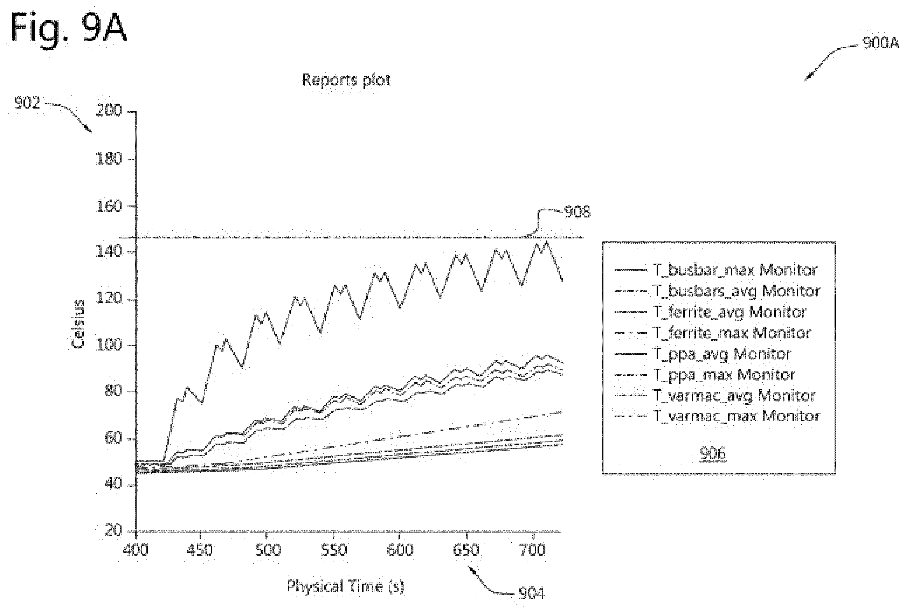

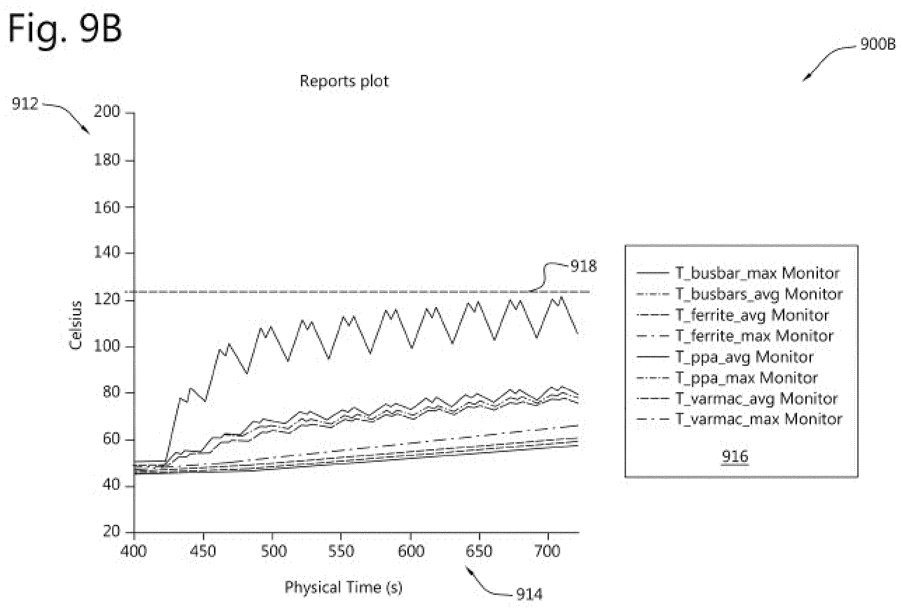

FIG. 9A illustrates a chart 900A of simulations of a temperature of conductive elements in an electric machine assembly during simulated operation at 120-175 km/h. Chart 900A was generated using computed fluid dynamics simulations.

In particular, chart 900A compares operating temperatures of different elements of an electric machine while in use. Chart 900A simulates operation of an electric machine without cooling of conductive elements in an axial direction. The Y axis 902 indicates operating temperature of several electrical components of an electric machine in degrees Celsius. The X axis 904 indicates operating time of an electric machine time in seconds. As shown in key 906, the temperature of 4 different conductive elements is charted overtime. For each of the 4 different conductive elements, a maximum temperature and an average temperature are charted over time. For example, the maximum temperature 908 of a busbar conductive element reaches approximately 145 degrees Celsius at about 700 seconds of operation.

Incorporating a cooling ring according to any the embodiments disclosed herein with axial openings maintains the operating temperature of conductive elements within the desired operating temperature. In particular, the cooling ring reduces the temperature of conductive elements which tend to generate the most heat.

In particular, chart 900B compares operating temperatures of different elements of an electric machine while in use. Chart 900B simulates operation of an electric machine with cooling of conductive elements in an axial direction The Y axis 912 indicates operating temperature of several electrical components of an electric machine in degrees Celsius. The X axis 914 indicates operating time of an electric machine time in seconds. As shown in key 916, the temperature of 4 different conductive elements is charted overtime. For each of the 4 different conductive elements, a maximum temperature and an average temperature are charted over time. For example, the maximum temperature 908 of a busbar conductive element reaches approximately 125 degrees Celsius at about 700 seconds of operation.

As can be seen by comparing chart 900A and chart 900B, conductive elements 906 which are cooled using a cooling ring without axial openings operate at higher temperatures as compared to conductive elements 916 which are cooled using a cooling ring with axial openings at the same operating conditions. As a result, cooling rings with axial openings to distribute cooling fluid in an axial direction reduce the operating temperatures of conductive elements of an electric machine to a desired operating temperature range..

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiments disclosed, but that the present disclosure will include all embodiments falling within the scope of the appended claims.

## Claims

1. A cooling ring for an electric machine, the cooling ring comprising:
a first portion with an exterior surface having a first end and a second end, and a hollow interior extending along a longitudinal axis of the cooling ring, wherein the hollow interior is configured to encompass a first end of a stator; and
a shoulder at the first end of the first portion extending radially outward, wherein the shoulder comprises an axial opening extending in a first direction, wherein the first direction is substantially parallel to the longitudinal axis of the cooling ring.

2. The cooling ring of claim 1, wherein the first portion forms one or more radially inward depressions spaced around at least part of the circumference of the first portion at the first end.

3. The cooling ring of claim 2, wherein each of the one or more depressions comprises a shoulder at the first end of the first portion extending radially outward and the axial opening.

4. The cooling ring of any of the previous claims, wherein the cooling ring is disposed between a housing and the first end of the stator, wherein a position of the cooling ring creates a gap between the housing and the exterior surface of the cooling ring.

5. The cooling ring of any of the previous claims, wherein a position of the axial opening is axially facing a first conductive element, wherein that the first conduct element is substantially in the first direction relative to the axial opening.

6. The cooling ring of claim 5, wherein the first conductive elements is a busbar.

7. The cooling ring of claim 5, wherein the first conductive elements is a winding.

8. The cooling ring of claim 5, wherein the first conductive elements is an I-pin.

9. The cooling ring of any of claims 4-8, wherein the gap, including the depression, is configured to fill with cooling fluid.

10. The cooling ring of any of the preceding claims, further including a radial opening extending in a second direction, wherein the second direction is substantially perpendicular to the first direction, and wherein the cooling fluid passes through the radial opening in substantially the second direction.

11. The cooling ring of claim 10, wherein a position of the one radial opening is radially facing a second conductive element.

12. The cooling ring of claim 11, wherein the second conductive element is at the first end of the stator.

13. The cooling ring of claims 11 or 12, wherein the second conductive element is a winding of the stator and/or an I-pin of the stator.

14. The cooling ring of any of the preceding claims, wherein the cooling ring is formed of plastic.

15. A stator cooling assembly for an electric machine, the stator assembly comprising:
a housing comprising a cooling fluid reservoir and a hollow opening, wherein the cooling fluid reservoir comprises a fluid opening extending radially inward from the cooling reservoir to the hollow opening;
a stator comprising a core and a first conductive element extending from the core in an axial direction, wherein the core comprises a cooling fluid channel, and wherein the fluid channel is positioned to align with the fluid opening of the housing; and
a cooling ring comprising:
a first portion with an exterior surface having a first end and a second end, and a hollow interior extending along a longitudinal axis of the cooling ring, wherein the hollow interior is configured to encompass the first conductive element of the stator,
a shoulder at the first end of the first portion extending radially outward, wherein the shoulder comprises an axial opening extending in a first direction, wherein the first direction is substantially parallel to the longitudinal axis of the cooling ring,
wherein the cooling ring is positioned in the hollow opening of the housing such that the second end is adjacent to the core, and an interior surface of the housing and the exterior surface of the cooling ring create a gap, and the axial opening faces a second conductive element, and
wherein the stator cooling assembly is configured to distribute cooling fluid from the cooling fluid reservoir through the cooling fluid channel to fill the gap, and further distribute the cooling fluid through the axial opening to the second conductive element.
